# EUROPÄISCHE PATENTSCHRIFT

(11) **EP 0 392 158 B1**
(45) Veröffentlichungstag und Bekanntmachung des Hinweises auf die Patenterteilung: **10.08.1994**
(21) Anmeldenummer: 90102788.8
(22) Anmeldetag: 13.02.1990
(51) Int. Cl.: F23C 9/00, F23C 7/00, F23D 17/00

(54) **Verfahren zum Betrieb einer Feuerungsanlage mit fossilen Brennstoffen**
Method for operating a combustion plant for fossil fuels
Procédé pour le fonctionnement d'une installation de combustion pour combustibles fossiles

(30) Priorität: 15.03.1989 CH 947/89
(43) Veröffentlichungstag der Anmeldung: 17.10.1990
(73) Patentinhaber: ASEA BROWN BOVERI AG, 5400 Baden (CH)
(72) Erfinder: Peter, Hans, CH-8902 Urdorf (CH)

(56) Entgegenhaltungen:
- DE-A- 3 501 189
- FR-A- 1 587 944
- FR-A- 2 370 235
- PATENT ABSTRACTS OF JAPAN, Band 8, Nr. 124 (M-301)[1561], 9. Juni 1984; & JP-A-59 27 109 (SANYO) 13-02-1984

## Beschreibung

Die Erfindung betrifft ein Verfahren zum Betrieb einer Feuerungsanlage mit fossilen Brennstoffen über einen Brenner.

### Stand der Technik

Bei Feuerungsanlagen für beispielsweise Zentralheizungen wird bei üblicher Bauart der Brennstoff über eine Düse in einen Brennraum eingedüst und dort unter Zuführung von Verbrennungsluft verbrannt. Grundsätzlich ist der Betrieb von solchen Feuerungsanlagen durch einen gasförmigen oder flüssigen Brennstoff möglich. Beim Einsatz eines flüssigen Brennstoffs liegt die Schwachstelle bezüglich einer sauberen Verbrennung in Bezug auf NOₓ-, CO-, UHC-Emissionen vordergründig bei der umfassend notwendigen Zerstäubung des Brennstoffes und dessen Vermischung mit der Verbrennungsluft.

Beim Einsatz eines gasförmigen Brennstoffes ist die Verbrennung mit einer wesentlichen Verminderung bezüglich Schadstoffemissionen gekennzeichnet, weil die Vergasung des Brennstoffes, im Gegensatz zum flüssigen Brennstoff, vorgegeben ist. Insbesondere bei Feuerungsanlagen für den häuslichen Gebrauch haben sich aber gasbetriebene Brenner nicht durchgesetzt, trotz der vielen diesbezüglichen Vorteile, welche solche Feuerungsanlagen bieten könnten. Der Grund mag darin liegen, dass die Beschaffung von gasförmigen Brennstoffen eine kostspielige Infrastruktur benötigt, des weiteren auch darin liegen, dass diese Vergasungsbrenner viel Unterhalt benötigen, nicht zuletzt auch darin, dass sich im Verlaufe des Betriebes in der Vergaskammer unerwünschte Ablagerungen bilden können, welche sehr schnell die Wirksamkeit der Vergasung erheblich beeinträchtigen, was zu einer Verschlechterung der Verbrennung und zu einer Erhöhung der Schadstoffemissionen führt. Ist einmal kein gasförmiger Brennstoff verfügbar, steht die Feuerungsanlage still.

Wird demnach ein flüssiger Brennstoff eingesetzt, so ist die Qualität der Verbrennung bezüglich tiefer Schadstoffemissionen weitgehend davon abhängig, ob es gelingt, einen optimalen Vermischungsgrad des Brennstoff/Frischluft-Gemisches bereitzustellen, d.h. eine vollständige Vergasung des flüssigen Brennstoffs zu gewährleisten. Dabei ist auch auf die Problematik im Bereich des Teillastbetriebes, wie sie in EP-A2-0 166 329 angegangen wird, hinzuweisen. Verschiedene andere bekannt gewordene Versuche, bei Teillastbetrieb magerer zu fahren, sind regelmässig gescheitert, denn hier verschlechtert sich der Ausbrand und die CO/UHC-Emissionen steigen sehr stark an. In der Fachsprache wird dieser Zustand unter der Bezeichnung CO/UHC-NOₓ-Schere umschrieben. Auch der Weg eine Vormischszone für das Brennstoff/Frischluft-Gemisch vor der eigentlichen Verbrennungszone vorzusehen, führt nicht zum Ziel eines betriebssicheren Brenners, denn es besteht hier die immanente Gefahr, dass eine Rückzündung von der Verbrennungszone in die Vormischzone den Brenner beschädigen könnte.

Aus EP-A1-0 210 462 ist ein Brenner bekannt geworden, der für die Verbrennung von flüssigem und allenfalls gasförmigem Brennstoff gut ist. Dieser Brenner kommt nun ohne eine Vormischzone aus. Die Eindüsung des flüssigen Brennstoffs und dessen vermischungsmässige Aufbereitung mit der zugeführten Luft Richtung Vergasungszustand geschieht solcherart, dass die Erzeugung einer Vorvermischung überflüssig wird. Da mit diesem Gegenstand der Impuls der Eindüsung vom flüssigen Brennstoff der Last der Anlage angepasst wird, ist das Gemisch nie zu mager oder zu fett. Obwohl die Vorteile des hier gewürdigten Brenners bezüglich Schadstoffemissionen nicht wegzuleugnen sind, hat es sich gezeigt, dass die Noₓ- und CO-Emissionswerte, obwohl sie gegenüber den gesetzlichen Grenzwerten tiefer liegen, zukünftig substantiell noch weiter zu vermindern sind. Des weiteren hat sich gezeigt, dass Verkokungsprobleme, herrührend von der Art der Eindüsung des flüssigen Brennstoffes, nicht auszuschliessen sind, und die Brennstoffeindüsung selbst nicht einfach zu handhaben ist. Ein weiteres Problem bildet die überschussluft und deren Temperatur im Verlauf der Gemischbildung in diesem Brenner, die vor der Zündung des Gemisches keine vollständige Verdampfung und demzufolge Vergasung des flüssigen Brennstoffes garantiert. Es hat sich des weiteren gezeigt, dass der Einsatz eines solchen Brenners in atmosphärischen Feuerungsanlagen keinen optimalen Betrieb ergibt, denn selbst wenn der Vergasungsgrad des flüssigen Brennstoffs weitgehend erreicht würde, wäre auf die örtlich hohen Flammentemperaturspitzen noch nicht eingewirkt, welche bekanntlich für die NOₓ-Bildung verantwortiich ist.
Aus FR-A-2 370 235 ist ein Verfahren zum Betrieb einer Feuerungsanlage mit fossilen Brennstoffen bekanntgeworden, bei welchem die Abgase aus dem Brennraum in einem Wärmetauscher abgekühlt werden. Ein Teil dieser abgekühlten Abgase wird mit Frischluft zu Verbrennungsluft vermischt, wobei die Verbrennungsluft vor Einleitung in den Brenner in einem weiteren Wärmetauscher vorerwärmt wird. Bei diesem Vorschlag muss man davon ausgehen, dass jene Minimierung der NOx-Emissionen nach neuester Gesetzgebung nicht zu erreichen ist. Ferner besteht hier kein Gewähr, dass ein Rückschlag der Flamme nicht erfolgt.

### Darstellung dar Erfindung

Hier will die Erfindung Abhilfe schaffen. Der Erfindung, wie sie in den Ansprüchen gekennzeichnet ist, liegt die Aufgabe zugrunde bei einer Feuerungsanlage der eingangs genannten Art ein Verfahren vorzuschlagen, welches die Schadstoff-Emissionswerte zu minimieren vermag, dies sowohl beim Einsatz eines flüssigen als auch gasförmigen Brennstoffes, darüber hinaus auch bei einem Mischbetrieb mit beiden Brennstoffarten.

Der wesentliche Vorteil der Erfindung ist darin zu sehen, dass gleichzeitig auf den Brennstoff und auf die Flammentemperatur im Brennraum eingewirkt wird. Wird die Feuerungsanlage mit flüssigem Brennstoff betrieben, so sorgt eine Abgasrückführung dafür, dass ein vollständig verdampftes Brennstoff/Verbrennungsluft-Gemisch der Verbrennung zugeführt werden kann. Diese durch die Abgasrückführung bedingte Verbesserung beeinflusst dann auch die Flammentemperatur solcherart, dass Spitzentemperaturen, die für die NOₓ-Bildung verantwortlich sind, nicht mehr auftreten. Wird demgegenüber die Feuerungsanlage mit einem gasförmigen Brennstoff betrieben, so liegt zwar bereits ein vergastes Gemisch vor, die Flammentemperatur erfährt aber auch hier eine positive Beeinflussung. Bei einem Mischbetrieb kommen alle Vorteile gleichzeitig zum Tragen.

Die Verbesserung bezüglich Schadstoffemissionen einer, allgemein gesprochen, mit fossilen Brennstoffen betriebenen Feuerungsanlagen weist also nicht bloss wenige Prozentpunkte auf, sondern allein die NOₓ-Emissionen werden dergestalt minimiert, dass vielleicht nur noch 10 % dessen gemessen wird, was die gesetzlichen Grenzwerte tolerieren. Somit ist eine ganz neue Qualitätsstufe auf diesem Weg erreicht worden.

Ein weiterer Vorteil der Erfindung ergibt sich aus der Möglichkeit hieraus, dass durch eine Rückführung von gekühlten Abgasen einen optimalen Betrieb in atmosphärischen Feuerungsanlagen bei nahstöchiometrischer Fahrweise ermöglicht wird.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung Ausführungsbeispiele der Erfindung näher erläutert. Alle für das unmittelbare Verständnis der Erfindung nicht erforderlichen Elemente sind fortgelassen. Die Strömungsrichtungen der verschiedenen Medien sind mit Pfeilen angegeben. In den verschiedenen Figuren sind jeweils gleiche Elemente mit den gleichen Bezugszeichen versehen.

### Kurze Beschreibung der Figuren

Es zeigt:
- Fig.1: eine Feuerungsanlage mit einer Abgasrückführung und eine Vorrichtung zur Temperaturbehandlung des Abgases sowie Vermischung der Abgase mit Frischluft zu Verbrennungsluft,
- Fig.2: eine Ansicht im Bereich des Gebläses und Antriebes für die Vermischung von Abgas mit Frischluft und Zuführung dieser Verbrennungsluft zum Brenner,
- Fig.3: eine Ansicht im Bereich einer Klappe, welche die mengenmässige Anteile von Abgas und Frischluft indiziert,
- Fig.4: einen Brenner für flüssige und/oder gasförmige Brennstoffe in perspektivischer Darstellung, entsprechend aufgeschnitten und
- Fig.5,6,7: entsprechende Schnitte durch die Ebenen V-V(Fig.5), VI-VI(Fig.6) und VII-VII(Fig.7), wobei diese Schnitte nur eine schematische, vereinfachte Darstellung des Brenners nach Fig.4 sind.

### Beschreibung der Ausführungsbeispiele

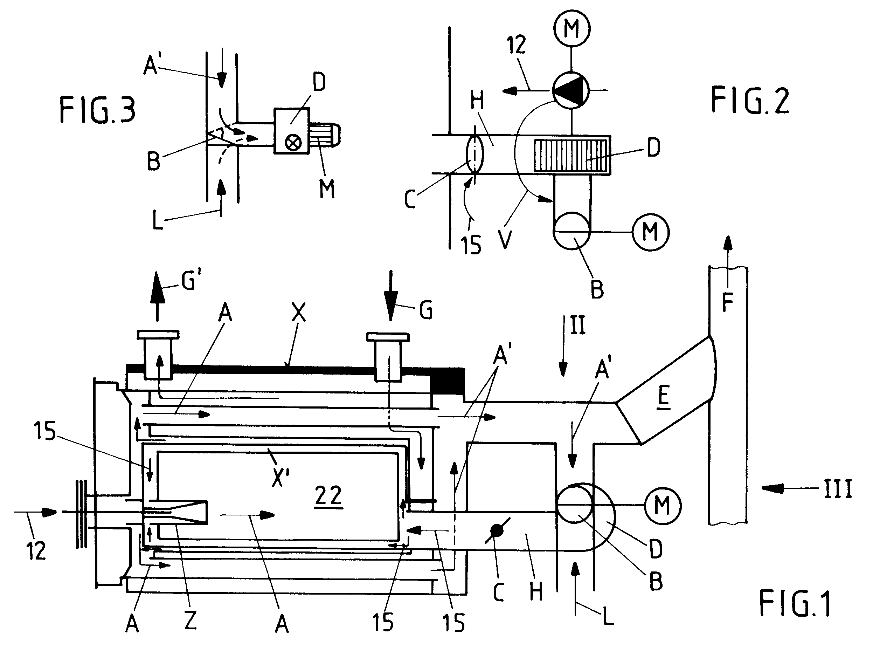

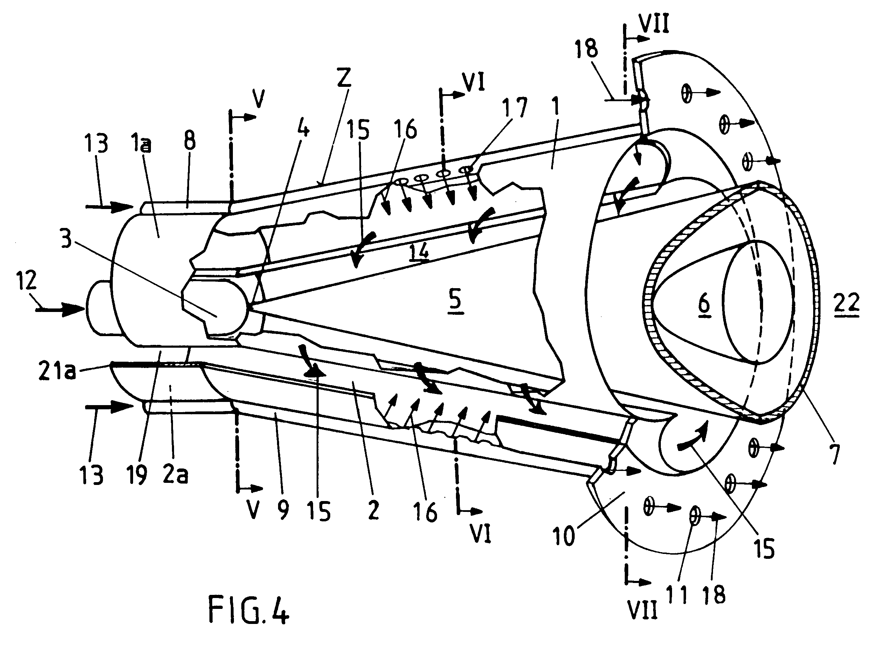

Fig.1 zeigt eine Feuerungsanlage mit einem Brenner Z, der hier allein durch einen flüssigen Brennstoff 12 betrieben wird. Ein Brenner, der sowohl mit flüssigen als auch mit gasförmigen Brennstoffen oder als Mischbetrieb, betrieben werden kann, ist in den Fig.4-7 dargestellt. Die heissen Abgase A aus dem Brennraum 22 durchlaufen einen Wärmetauscher X, dessen Wärmeaustausch durch Wasser aufrechterhalten wird, wie dies durch den Wassereingang G und den Wasserausgang G'zum Ausdruck kommt. Selsbtverständlich kann die Wärmetauschung auch durch andere Medien erzielt werden. Der Fluss der heissen Abgase A durch den Wärmetauscher X wird in etwa durch die Richtungen der mit A gekennzeichneten Pfeile wiedergegeben. Die einzelnen Kammern muss man sich dabei als Rohrstränge vorstellen, die mit einem Wasserfluss ummantelt sind. Die einmal dann abgekühlten Abgase A′, welche nach Durchlauf des Wärmetauschers X nur noch eine Temperatur von ca. 180°C aufweisen, strömen dann über ein Rauchrohr E zum Kamin F. Vor dem Beginn des Rauchrohres E ist eine Abzweigung vorgesehen, über welche eine gewünschte Abgasteilmenge abgesaugt werden kann. Diametral entgegengesetzt führt eine Leitung Frischluft L mit einer Temperatur von ca. 15°C heran. Die Dosierung zwischen gekühlten Abgasen A'und Frischluft L wird durch eine Klappe B vorgenommen, welche sich auf der Höhe einer Rückleitung H befindet, die die Verbrennungsluft 15, die nunmehr ein Abgas/Frischluft-Gemisch ist, über ein Gebläse D zum Brenner Z leitet. Der Massenstrom dieser Verbrennungsluft 15 wird nach deren Dosierung über eine weitere in der Rückleitung H plazierte Klappe C geregelt. Wie die Strömungspfeile versinnbildlichen wollen, strömt die Verbrennungsluft 15 nach ihrer Dosierung und Massenstromregelung nicht direkt zum Brenner Z, sondern sie durchläuft in nun wärmeaufnehmendem Sinn einen zweiten Wärmetauscher X′, d.h., die Verbrennungsluft 15 wird vor deren Einsatz aufgewärmt, und zwar von der Wärme der Abgase A. Der Zweck dieses Verfahrens ist eine Minimierung der Schadstoffemissionen, die sich erreichen lässt, wenn dafür gesorgt wird, dass der flüssige Brennstoff im Brenner Z bis zur Zündungsstelle des Gemisches vollständig zur Verdampfung gebracht werden kann. Um diese Forderung zu erfüllen, werden, wie bereits oben vorrichtungsmässig erläutert wurde, auf dem Weg zum Rauchrohr E Abgase A'abgesaugt, mit Frischluft L im Verhältnis 7 : 10 vermischt und über das bereits erwähnte Gebläse D in den Wärmetauscher X′ geleitet. Vorzugsweise befinden sich diese Wärmetauscher X und X′ im Feuerraum des Kessels, was aus der Prinzipfigur 1 nicht hervorgehen kann. Die den Wärmetauscher X′ durchströmende Verbrennungluft 15 heizt sich dabei auf ca. 400°C, bevor sie dem Brenner Z zugeleitet wird. Der Vorteil dieser aufbereiteten Verbrennungsluft 15 liegt nicht nur darin, dass der flüssige Brennstoff 12 sicher verdampft werden kann, sondern auch darin, dass die Flammentemperatur im Brennraum 22 ein gleichmässiges Profil hat, was die Gefahr der Bildung von NOₓ ausser Kraft setzt. Selbst wenn gasförmiger Brennstoff zum Einsatz kommt, macht sich die letztgenannte Feststellung immer noch positiv bemerkbar, so dass es ohne weiteres angebracht ist, auch beim Betrieb des Brenners Z mit einem gasförmigen Brennstoff auf die Abgasrückführung zurückzugreifen. Die hier gewählte Art der Abgasrückführung, indem die Abgase A zuerst abgekühlt werden, dann mit Frischluft L zu Verbrennungsluft 15 vermischt werden, hat den Vorteil, dass Dosierungselemente, Gebläse und Regelungseinrichtungen mit tiefen Temperaturen beaufschlagt werden, was nicht der Fall wäre, wenn die Abgase A in dem Wärmetauscher X vorher nicht abgekühlt würden. Wie bereits gesagt, beträgt die Temperatur der abgekühlten Abgase A'ca. 180°C, diejenige von Frischluft L ca. 15°C: Die Verbrennungsluft 15 weist demnach vor Rückströmung in den Wärmetauscher X eine Temperatur von ca. 60°C auf. Alle Elemente wie Dosierungsklappe B, Gehäuse D, Regelungsklappe C brauchen somit nicht mit hochlegierten warmfesten Legierungen ausgelegt zu werden.

Fig.2 zeigt, auch weitgehend schematisch, die Anordnung der Rückleitung H bezüglich des Gebläses D, die Förderung des flüssigen Brennstoffes 12 über einen Antrieb M, die Dosierklappe B mit Antrieb M sowie die Klappe C zur Regelung des Verbrennungsluft-Massenstromes 15. Der Pfeilzug V will auf eine Option hinweisen, welche darin besteht, dass der flüssige Brennstoff nach dem Gebläse D der Verbrennungsluft 15 zugemischt werden kann.

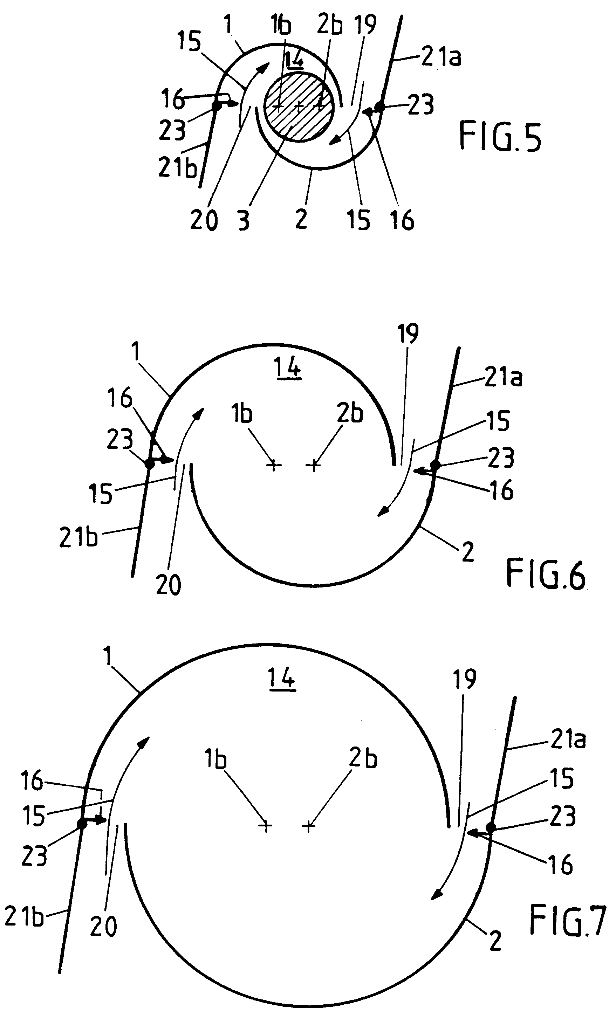

Um den Aufbau des Brenners Z besser zu verstehen, ist es von Vorteil, wenn der Leser gleichzeitig zu Fig.4 die einzelnen Schnitte nach Fig. 5-7 heranzieht. Des weiteren, um Fig.4 nicht unnötig unübrsichtlich zu gestalten, sind in ihr die nach Fig. 5-7 schematisch gezeigten Leibleche 21a, 21b nur andeutungsweise aufgenommen worden. Im folgenden werden auch bei der Beschreibung von Fig.4 wahlweise, nach Bedarf, auf die restlichen Fig. 5-7 hingewiesen.

Der Brenner Z gemäss Fig.1 besteht aus zwei halben hohlen Teilkegelkörpern 1, 2, die vesetzt zueinander aufeinander liegen. Die Versetzung der jeweiligen Mittelachse 1b, 2b der Teilkegelkörper 1, 2 zueinander schafft auf beiden Seiten in spiegelbildlicher Anordnung jeweils einen tangentialen Lufteintrittsschlitz 19, 20 frei, (Fig. 5-7), durch welche die Verbrennungsluft 15 (Abgas/Frischluft-Gemisch) in den Innenraum des Brenners Z, d.h. in den Kegelhohlraum 14 strömt. Die beiden Teilkegelkörper 1, 2 haben je einen zylindrischen Anfangsteil 1a, 2a, die ebenfalls analog den Teilkegelkörpern 1, 2 versetzt zueinander verlaufen, so dass die tangentialen Lufteintrittsschlitze 19, 20 vom Anfang an vorhanden sind. In diesem zylindrischen Anfangsteil 1a, 2a ist eine Düse 3 untergebracht, deren Brennstoffeindüsung 4 mit dem engsten Querschnitt des durch die zwei Teilkegelkörper 1, 2 gebildeten kegeligen Hohlraumes 14 zusammenfällt. Selbstverständlich kann der Brenner Z rein kegelig, also ohne zylindrische Anfangsteile 1a, 2a, ausgeführt sein. Beide Teilkegelkörper 1, 2 weisen wahlweise je eine Brennstoffleitung 8,9 auf, die mit Öffnungen 17 versehen sind, durch welche ein gasförmiger Brennstoff 13, der durch die tangentialen Lufteintrittsschlitze 19, 20 strömenden Verbrennungsluft 15 zugemischt werden kann. Die Lage dieser Brennstoffleitungen 8, 9 geht schematisch aus Fig. 2 - 4 hervor: Die Brennstoffleitungen 8, 9 sind am Ende der tangentialen Lufteintrittsschlitze 19, 20 angebracht, so dass dort auch die Zumischung 16 des gasförmigen Brennstoffes 14 mit der einströmenden Verbrennungsluft 15 stattfindet. Selbstverständlich ist ein Mischbetrieb mit beiden Brennstoffarten möglich. Brennraumseitig 22 weist der Brenner eine kragenförmige als mögliche Verankerung für die Teilkegelkörper 1, 2 dienende Abschlussplatte 10 mit einer Anzahl Bohrungen 11 auf, durch welche, nötigenfalls, Verdünnungsluft bzw. Kühlluft 18 dem vorderen Teil des Brennraumes 22 bzw. dessen Wand zugeführt werden kann. Der durch die Düse 3 strömende flüssige Brennstoff 12 wird in einem spitzen Winkel in den Kegelhohlraum 14 eingedüst, dergestalt, dass sich in der Brenneraustrittsebene ein möglichst homogener kegeliger Brennstoffspray einstellt. Bei der Brennstoffeindüsung 4 kann es sich um eine luftunterstützte Düse oder um einen Druckzerstäuber handeln. Das kegelige Flüssigbrennstoffprofil 5 wird von einem tangential einströmenden rotierenden Verbrennungsluftstrom 15 umschlossen. In axialer Richtung wird die Konzentration des Flüssigbrennstoffes 12 fortlaufend durch die eingemischte Verbrennungsluft 15 abgebaut. Wird gasförmiger Brennstoff 13/16 eingesetzt, geschieht die Gemischbildung mit der Verbrennungsluft 15 direkt am Ende der Lufteintrittsschlitze 19, 20. Bei der Eindüsung von flüssigem Brennstoff 12 wird im Bereich des Wirbelaufplatzens, also im Bereich der Rückströmzone 6, die optimale, homogene Brennstoffkonzentration über den Querschnitt erreicht. Die Zündung erfolgt an der Spitze der Rückströmzone 6. Erst an dieser Stelle kann eine stabile Flammenfront 7 entstehen. Ein Rückschlag der Flamme ins Innere des Brenners Z, wie dies bei bekannten Vormischstrecken latent der Fall ist, wogegen dort mit komplizierten Flammenhaltern Abhilfe gesucht wird, ist hier nicht zu befürchten. Ist die Verbrennungsluft 15 vorgeheizt wie dies unter Fig.1 erläutert ist, so stellt sich eine beschleunigte ganzheitliche Verdampfung des flüssigen Brennstoffes 12 ein, bevor der Punkt am Ausgang des Brenners Z erreicht ist, an dem die Zündung des Gemisches stattfinden kann. Der Grad der Verdampfung ist selbstverständlich von der Grösse des Brenners Z, der Tropfengrössenverteilung und der Temperatur der Verbrennungsluft 15 abhängig. Unabhängig aber davon, ob neben der homogenen Tropfenvormischung durch Verbrennungsluft 15 niedriger Temperatur oder zusätzlich nur eine partielle oder die vollständige Tropfenverdampfung durch vorgeheizte Verbrennungsluft 15 erreicht wird, fallen die Stickoxid- und Kohlenmonoxidemissionen niedrig aus, wenn der Luftüberschuss mindestens 60 % beträgt, womit hier eine zusätzliche Vorkehrung zur Minimierung der NOₓ-Emissionen zur Verfügung steht. Im Falle der vollständigen Verdampfung vor dem Eintritt in die Verbrennungszone sind die Schadstoffemissionswerte am niedrigsten. Gleiches gilt auch für den nahstöchiometrischen Betrieb, wenn die Überschussluft durch rezirkulierendes Abgas ersetzt wird. Bei der Gestaltung der Teilkörper 1, 2 hinsichtlich Kegelneigung und der Breite der tangentialen Lufteintrittsschlitze 19, 20 sind enge Grenzen einzuhalten, damit sich das gewünschte Strömungsfeld der Luft mit ihrer Rückströmzone 6 im Bereich der Brennermündung zur Flammenstabilisierung einstellt. Allgemein ist zu sagen, dass eine Verkleinerung der Lufteintrittsschlitze 19, 20 die Rückströmzone 6 weiter stromaufwärts verschiebt, wodurch dann allerdings das Gemisch früher zur Zündung käme. Immerhin ist hier zu sagen, dass die einmal geometrisch fixierte Rückströmzone 6 an sich positionsstabil ist, denn die Drallzahl nimmt in Strömungsrichtung im Breich der Kegelform des Brenners zu. Die Konstruktion des Brenners eignet sich vorzüglich, bei vorgegebener Baulänge des Brenners, die Grösse der tangentialen Lufteintrittsschlitze 19, 20 zu verändern, indem die Teilkegelkörper 1, 2 zu- oder auseinander verkleinert bzw. vergrössert sich der Abstand der beiden Mittelachsen 1b, 2b, und dementsprechend verändert sich die Spaltgrösse der tangentialen Lufteintrittsschlitze 19, 20, wie dies aus Fig.5 - 7 besonders gut hervorgeht. Selbstverständlich sind die Teilkegelkörper 1, 2 auch in einer anderen Ebene zueinander verschiebbar, wodurch sogar eine Überlappung derselben angesteuert werden kann. Ja, es ist sogar möglich, die Teilkegelkörper 1, 2 durch eine gegenläufige drehende Bewegung spiralartig einander zu verschieben. Somit hat man es in der Hand, die Form und die Grösse der tangentialen Lufteintritte 19, 20 beliebig zu variieren, womit der Brenner ohne Veränderung seiner Baulänge individuell angepasst werden kann.

Aus Fig.5 - 7 geht auch die Lage der Leitbleche 21a, 21b hervor. Sie haben Strömungseinleitungsfunktionen, wobei sie, entsprechend ihrer Länge, das jeweilige Ende der Teilkegelkörper 1 und 2 in Anströmungsrichtung der Verbrennungsluft 15 verlängern. Die Kanalisierung der Verbrennungsluft in den Kegelhohlraum 14 kann durch Öffnung bzw. Schliessung der Leitbleche 21a, 21b um den Drehpunkt 23 optimiert werden, insbesondere ist dies dann vonnöten, wenn die ursprüngliche Spaltgrösse der tangentialen Lufteintrittsschlitze 19, 20 verändert wird. Der Brenner Z kann auch ohne Leitbleche 21a, 21b betrieben werden.

## Patentansprüche

1. Verfahren zum Betrieb einer Feuerungsanlage mit fossilen Brennstoffen über einen Brenner, wobei die Abgase aus dem Brennraum in einem Wärmetauscher abgekühlt werden, wobei ein Teil dieser abgekühlten Abgase mit Frischluft zu Verbrennungsluft vermischt wird, und wobei die Verbrennungsluft vor Einleitung in den Brenner in einem weiteren Wärmetauscher vorerwärmt wird, dadurch gekennzeichnet, dass die Verbrennungsluft (15) über mindestens zwei tangentiale Eintrittsschlitze (21a, 21b), die durch versetzt aufeinander positionierten Teilkegelkörper (1, 2) mit in Strömungsrichtung zunehmender Querschnittsfläche gebildet werden, ins Innenraum des Brenners (Z) strömt, dass die Verbrennungsluft (15) innerhalb des Brenners (Z) mit Brennstoff (12, 13) angereichert wird, dass die Zündung des aus Verbrennungsluft (15) und Brennstoff (12, 13) bestehenden Gemisches am Ausgang des Brenners (Z) stattfindet, und dass die Flamme im Bereich der Brennermündung durch eine Rückströmzone (6) stabilisiert wird.

2. Verfahren nach Anspruch 1, dadurch gekennzeichnet, dass die abgekühlten Abgase (A') mit Frischluft (L) im Verhältnis 7:10 vermischt werden.

3. Verfahren nach Anspruch 1, dadurch gekennzeichnet, dass die Frischluft (L) vor Beaufschlagung des Brenners (Z) auf 400°C vorerwärmt wird.

4. Verfahren nach Anspruch 1, dadurch gekennzeichnet, dass die Menge der in den Brenner (Z) einströmenden Verbrennungsluft (15) durch Veränderung der Einströmungsöffnung der tangentialen Eintrittsschlitze (21a, 21b) vergrössert oder verkleinert wird.

## Claims

1. Method for operating a firing plant using fossil fuels by means of a burner, the exhaust gases from the combustion space being cooled in a heat exchanger, part of these cooled exhaust gases being mixed with fresh air to provide combustion air, and this combustion air being preheated in a further heat exchanger before introduction into the burner characterized in that the combustion air (15) flows into the inner space of the burner (Z) via at least two tangential inlet slots (21a, 21b), which are formed by part-conical bodies (1, 2) positioned offset one upon the other and having a cross-sectional area increasing in the direction of flow, in that the combustion air (15) is enriched with fuel (12, 13) inside the burner (Z), in that the ignition of the mixture comprising combustion air (15) and fuel (12, 13) takes place at the outlet of the burner (Z), and in that the flame is stabilized in the region of the burner mouth by a reverse flow zone (6).

2. Method according to Claim 1, characterized in that the cooled exhaust gases (A') are mixed with fresh (L) air in the ratio 7:10.

3. Method according to Claim 1, characterized in that the fresh air (L) is preheated to 400°C before it is supplied to the burner (Z).

4. Method according to Claim 1, characterized in that the quantity of combustion air (15) flowing into the burner (Z) is increased or reduced by altering the inlet opening of the tangential inlet slots (21a, 21b).

## Revendications

1. Procédé pour l'opération d'une installation de chauffe à l'aide de combustibles fossiles par l'intermédiaire d'un brûleur, les gaz d'échappement en provenance de la chambre de combustion étant refroidis dans un échangeur thermique, une partie de ces gaz d'échappement refroidis étant mélangés à de l'air frais pour en faire de l'air de combustion, et l'air de combustion étant préchauffé, avant introduction dans le brûleur, dans un échangeur thermique supplémentaire, caractérisé en ce que l'air de combustion (15) s'écoule dans l'espace interne du brûleur (Z) en passant par au moins deux fentes d'entrée tangentielles (21a, 21b), qui sont formées avec une section croissante dans la direction de l'écoulement à l'aide de troncs de cône (1,2) positionnés de manière décalée l'un par rapport à l'autre, que l'air de combustion (15) est enrichi, à l'intérieur du brûleur (Z) avec du combustible (12, 13), que l'allumage du mélange composé d'air de combustion (15) et de combustible (12, 13) a lieu à la sortie du brûleur (Z), et que la flamme est stabilisée dans la zone de l'embouchure du brûleur par une zone de retour de courant (6).

2. Procédé selon la revendication 1, caractérisé en ce que les gaz d'échappement refroidis (A') sont mélangés avec de l'air frais (L) dans le rapport de 7:10.

3. Procédé selon la revendication 1, caractérisé en ce que l'air frais (L) est préchauffé à 400°C avant admission dans le brûleur (Z).

4. Procédé selon la revendication 1, caractérisé en ce que la quantité d'air de combustion (15) qui pénètre par écoulement dans le brûleur (Z) peut être augmentée ou réduite par modification de l'orifice d'admission des fentes d'entrée tangentielles (21a, 21b).
